# EUROPEAN PATENT SPECIFICATION

(11) **EP 0 645 930 B1**
(45) Date of publication and mention of the grant of the patent: **14.06.2000**
(21) Application number: 94912090.1
(22) Date of filing: 11.04.1994
(51) Int. Cl.: H04N 7/24

(54) **METHOD AND APPARATUS FOR CODING IMAGE**
VERFAHREN UND VORRICHTUNG ZUR BILDKODIERUNG
PROCEDE ET APPAREIL DE CODAGE D'IMAGE

(30) Priority: 09.04.1993 JP 10594393
(43) Date of publication of application: 29.03.1995
(60) Divisional application: 98115578.1
(73) Proprietor: SONY CORPORATION, Tokyo 141 (JP)
(72) Inventor: ODA, Tsuyoshi, Shinagawa-ku Tokyo 141 (JP)
(74) Representative: Cotter, Ivan John
(86) International application number: PCT/JP94/00610
(87) International publication number: WO 94/24822

(56) References cited:
- EP-A- 0 475 251
- EP-A- 0 493 130
- EP-A- 0 509 576
- EP-A- 0 535 960
- JP-A- 3 217 183
- JP-A- 3 252 284
- PROCEEDINGS OF THE PICTURE CODING SYMPOSIUM (PCS), LAUSANNE, MAR. 17 - 19, 1993, no. -, 17 March 1993 SWISS FEDERAL INSTITUTE OF TECHNOLOGY, pages 19.3/A-19.3/B, XP 000346426 NICOULIN A ET AL 'FEED-BACK FREE RATE CONTROL FOR DIGITAL VIDEO CODING'
- IECE Technical Research Report, IE81, (49) (1981), SAITO, HARASHIMA, MIYAKAWA, pages 55 to 60, Prebuffer Control System, page 57, 58, Forecast Coding System Applied to Prebuffer Control Transmission Rate Based on Information Source Division.
- HIROSHI YASUDA (Auther), "International Standard for Multi-Media Coding", June 30, 1991 (30.06.91), Maruzen, pages 126 to 142, 153 to 156.

## Description

This invention relates to encoding source video data. A preferred form of implementation of the invention described hereinbelow provides a picture encoding method and apparatus which are used in a system for implementing encoding for storage to a video signal of a moving picture to record the coded signal onto a picture recording medium such as an optical disc, a magnetic disc, or a magnetic tape, etc., or a system for transmitting a video signal of a moving picture through a transmission path.

Hitherto, in a system for transmitting a video signal of a moving picture to a remote place, for example, as in the television conference system, the television telephone system, etc., or a system for recording a video signal of moving picture onto a picture recording medium such as an optical disc, a magnetic disc or magnetic tape, etc., or reproducing a recorded video signal of moving picture, there is adopted for the purpose of efficiently utilizing transmission path (or picture recording medium), a scheme to implement so called efficient encoding to a video signal by making use of correlation between lines or correlation between frames that video signal has to reduce redundancies in the spatial axis direction and the time axis direction to transmit only significant information, thus to improve transmission efficiency.

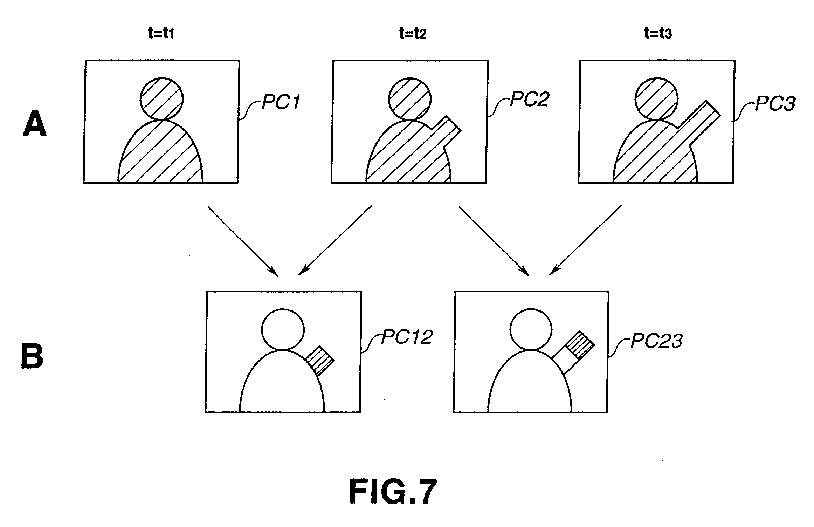

For example, in encoding processing in the spatial axis direction (hereinafter intra-frame coding processing), e.g., correlation between lines of a video signal is utilized as shown in FIG. 7A. In the case of attempting to transmit respective pictures PC1, PC2, PC3 ··· constituting a moving picture at times t1, t2, t3 ···, picture data to be transmission-processed is caused to undergo one-dimensional coding, e.g., within the same scanning line, or a picture is divided into, e.g., a plurality of blocks to allow picture data of respective blocks to undergo two-dimensional coding to thereby carry out data compression, thus to improve transmission efficiency.

Moreover, in coding processing in the time axis direction (hereinafter referred to as intra-frame coding processing), intra-frame correlation of video signal is utilized to determine, by so called predictive coding, for example, picture data PC12, PC23 ··· comprised of deficiencies (so called predictive errors) of picture data every corresponding pixels between adjacent pictures PC1 and PC2, PC2 and PC3 ··· in succession to transmit these picture data PC12, PC23, ··· to thereby carry out data compression, thus to improve transmission efficiency.

Thus, as compared to the case where all picture data of pictures PC1, PC2, PC3 ··· are transmitted, a video signal can be transmitted by extremely lesser data quantity.

Further, in the predictive coding in the above-described intra-frame coding processing, motion compensated prediction is used, e.g., in macro block units in order to further improve efficiency. Namely, e.g., in the case where a person at the central portion of picture moves, or the like, motion (movement) of an object moving in the picture is detected to correct position of picture data used for prediction in the former picture by that motion to carry out predictive coding, thereby making it possible to improve coding efficiency. However, even when such motion compensated prediction is employed, many data must be transmitted with respect to the portion where an object moves and appears from behind. In view of this, not only motion compensation in the above-described forward direction, but also motion compensation in backward direction or in both directions of forward and backward directions are carried out in combination, thereby making it possible to further improve coding efficiency.

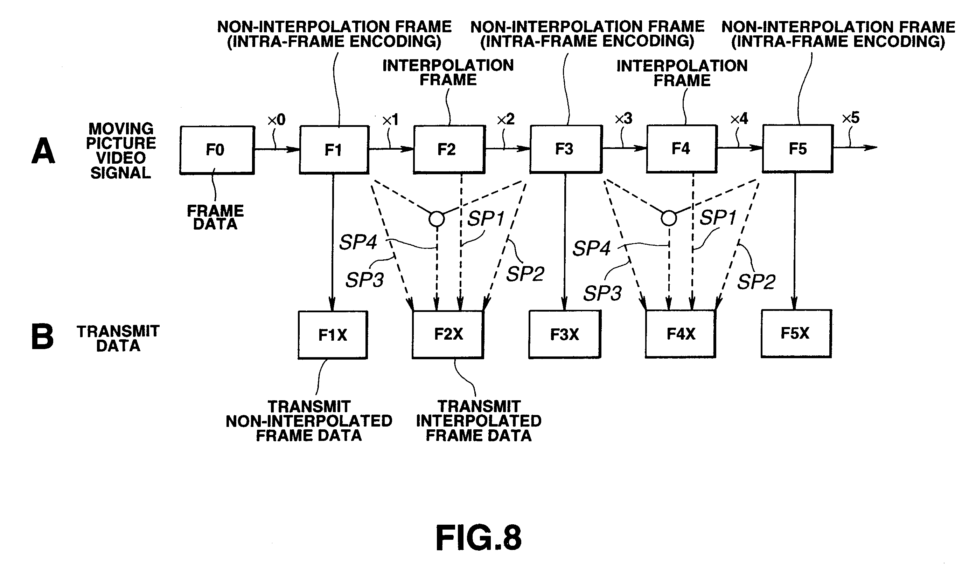

In actual terms, as shown in FIG. 8A, in macro blocks of frame data F0, F1, F2, F3 of the 0th, first, second, third ··· frames of a video signal of moving picture to be transmitted, in the case where there took place changes of pictures as respectively indicated by motion vectors x0, x1, x2, x3 ··· between frames in succession, device on the transmitter side designates frames at intervals of a predetermined number of frames (e.g., every other frame), i.e., second, fourth ··· frames as interpolation frame to implement so called predetermined interpolation frame processing to these interpolation frames as shown in FIG. 8B to thereby generate transmit interpolated frame data F2X, F4X ··· Further, with respect to non-interpolation frames, the device on the transmitting side implements a predetermined coding processing to frame data F1, F3 ··· to generate transmit non-interpolated frame data F1X, F3X ···.

For example, difference SP2 (predictive error) between motion compensated frame data F3 and F2, difference SP3 between motion compensated frame data F1 and F2, and difference SP4 between frame data obtained by implementing interpolation processing to motion compensated frame data F1, F3 and frame data F2 are respectively determined in macro block units to compare difference (data) SP1 of frame data F2 and those differences. Then, data having minimum data quantity generated of those data SP1 ∼ SP4 is caused to be transmit interpolated data F2X in macro block units. Similarly, transmit interpolated data F4X ··· with respect to respective interpolation frames are generated. Further, e.g., DCT processing and variable length coding processing, etc. are implemented to frame data F1, F3 ··· of non-interpolation frames to generate transmit non-interpolated frame data F1X, F3X ···.

The transmit non-interpolated frame data F1X, F3X ··· and transmit interpolated frame data F2X, F4X ··· are transmitted to the device on the receiving side as transmit data along with motion vectors x0, x1, x3 ···.

On the other hand, the device on the receiving side implements decoding processing corresponding to coding processing on the transmitting side to transmit data (transmit non-interpolated frame data F1X, F3X ···, transmit interpolated frame data F2X, F4X ···, data of motion vectors x0, x1, x3 ···), thus to reproduce frame data F0, F1, F2, F3 ···. As a result, motion compensation is implemented not only in forward direction but also in backward direction or in forward and backward directions, thereby making it possible to further improve coding efficiency.

Picture encoding apparatus and picture decoding apparatus having the above-described function will now be described.

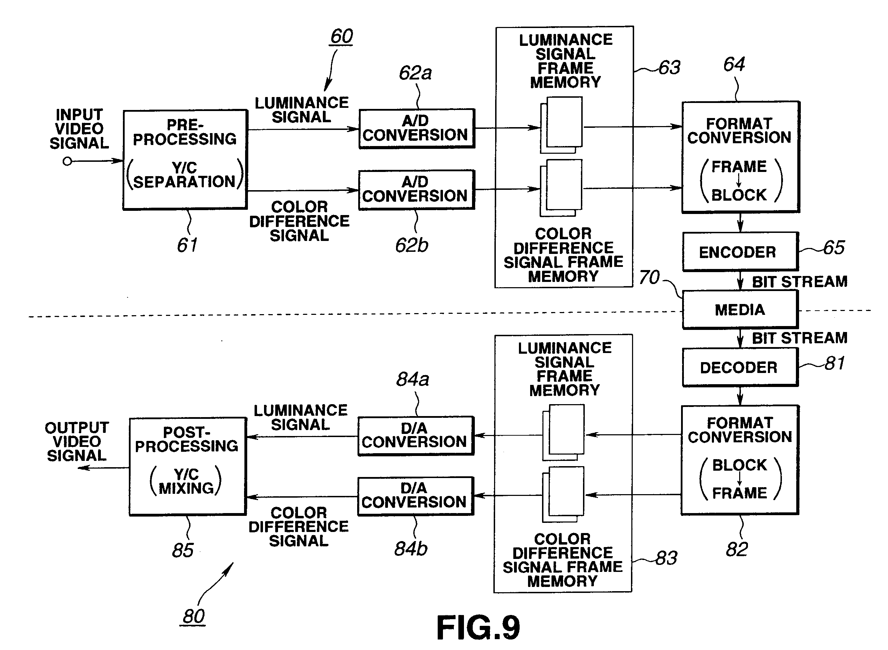

This picture encoding apparatus comprises, as shown in FIG. 9, a pre-processing circuit 61 for separating an input video signal VD into luminance signal and color difference signal, analog/digital (hereinafter referred to as A/D) converting circuits 62a, 62b for respectively converting the luminance signal and the color difference signal from the pre-processing circuit 61 into digital signals, a frame memory group 63 for storing luminance data and color difference data (hereinafter referred to as picture data) from the A/D converting circuits 62a, 62b, a format converting circuit 64 for reading out picture data from the frame memory group 63 in accordance with block format, and an encoder 65 for implementing efficient coding to picture data of block from the format converting circuit 64.

In operation, pre-processing circuit 61 separates input video signal VD into luminance signal and color difference signal. A/D converting circuits 62a, 62b respectively converts luminance signal and color difference signal into luminance data and color difference data each comprised of 8 bits. Frame memory group 63 stores these luminance and color difference data.

Format converting circuit 64 reads out, in accordance with block format, picture data (luminance data, color difference data) stored in the frame memory group 63. Encoder 65 encodes the picture data thus read out by a predetermined efficient coding to output bit stream.

This bit stream is delivered to picture decoding apparatus 80 through transmission media 70 comprised of transmission path or picture recording media such as, optical disc, magnetic disc or magnetic tape, etc.

This picture decoding apparatus 80 comprises, as shown in the FIG. 9 mentioned above, decoder 81 corresponding to the encoder 65, format converting circuit 82 for converting picture data reproduced by the decoder 81 into frame format, frame memory groups 83 for storing picture data from the format converting circuit 82, D/A converting circuits 84a, 84b for converting luminance data, color difference data which have been read out from the frame memory group 83 into analog signals, and post-processing circuit 85 for mixing luminance signal, color difference signal from the D/A converting circuits 84a, 84b, thus to generate output video signal.

Decoder 81 decodes bit stream by decoding corresponding to efficient coding of encoder 65 to reproduce picture data of block format. Format converting circuit 82 converts this picture data into frame format to store it into frame memory group 83.

D/A converting circuits 84a, 84b respectively convert luminance data and color difference data which have been read out from frame memory group 83 into luminance signal and color difference signal. Post-processing circuit 81 mixes these luminance signal and color difference signal, thus to generate output video signal.

In actual terms, pre-processing circuit 61 and A/D converting circuits 62a, 62b convert luminance signal and color difference signal into digital signal as described above to reduce quantity of data so that the numbers of pixels become equal to one half of those of luminance signal in upper and lower directions and in left and right directions with respect to the luminance signal thereafter to implement time axis multiplexing processing thereto to deliver luminance data and color difference data thus obtained to frame memory group 63.

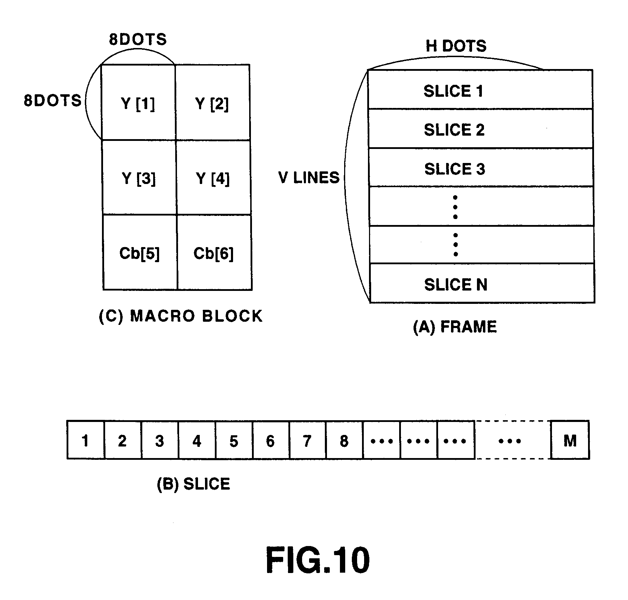

From frame memory group 63, luminance data and color difference data are read out in accordance with block format as described above. Namely, e.g., picture data of one frame is divided into N slices as shown in FIG. 10A. Each slice is caused to include M macro blocks as shown in FIG. 10B. Each macro block is composed of luminance data Y1, Y2, Y3, Y4 of four luminance blocks consisting of 8x8 pixels adjacent in upper and lower directions and in left and right directions and color difference data Cb, Cr of color blocks consisting of 8x8 pixels in a range corresponding to these four luminance blocks. From frame memory group 63, luminance data and color difference data are read out so that picture data are successive in macro block units within slice and are successive in order of Y1, Y2, Y3, Y4, Cb, Cr within macro block. Picture data which have been read out in accordance with block format in this way are delivered to encoder 65.

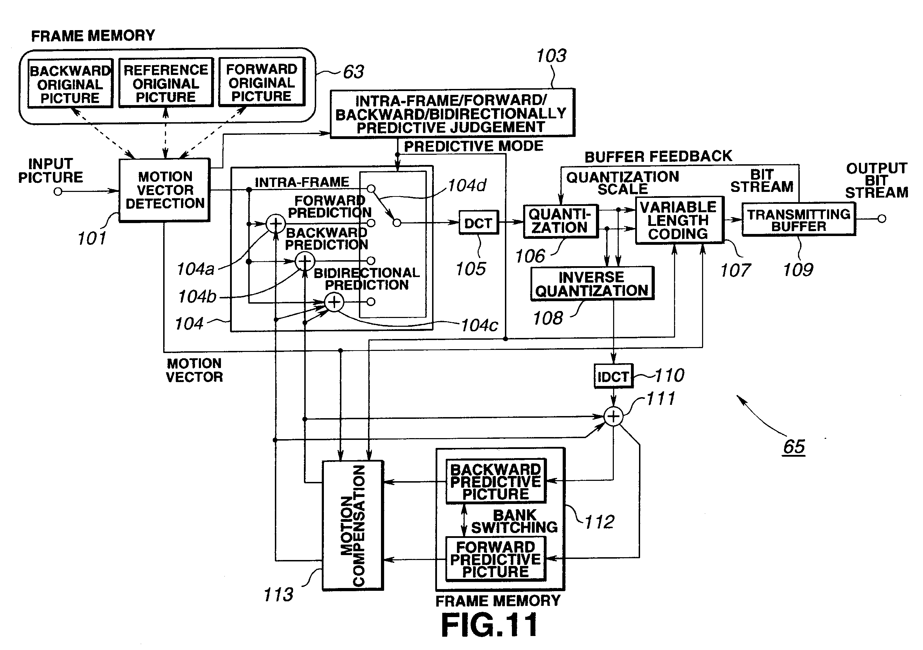

Encoder 65 comprises motion vector detecting circuit 101 as shown in FIG. 11. This motion vector detecting circuit 101 detects, in macro block units, motion vector of picture data delivered thereto in accordance with block format. Namely, motion vector detecting circuit 101 detects, in macro block units, motion vector of current reference picture by forward original picture and/or backward original picture stored in frame memory group 63. Here, detection of motion vector is carried out such that minimum one of absolute value sums of differences between frames in macro block units is caused to be corresponding motion vector. The motion vector thus detected is delivered to motion compensating circuit 113, etc., and intra-frame differences in macro block units are delivered to intra-frame/forward/backward bidirectionally predictive judging circuit 103.

This intra-frame/forward/backward/bidirectionally predictive judging circuit 103 determines predictive mode of reference block on the basis of this value to control predictive coding circuit 104 so as to carry out switching of intra-frame/forward/backward/bidirectional prediction in macro block units. Predictive coding circuit 104 comprises adding circuits 104a, 104b, 104c and selecting (changeover) switch 104d, and is operative so that when predictive coding mode is intra-frame coding mode, it selects input picture itself, and when predictive coding mode is forward/backward/bidirectionally predictive mode, it selects differences (hereinafter referred to as difference data) every pixels of input picture data with respect to respective predictive pictures, thus to deliver the selected data to DCT circuit 105.

DCT circuit 105 implements DCT processing to input picture data or difference data in block units by making use of the two-dimensional correlation of video signal to deliver coefficient data thus obtained to quantizing circuit 106.

The quantizing circuit 106 quantizes coefficient data by using quantization step size (quantization scale) determined every macro block or slice to deliver quantized data thus obtained to variable length coding (hereinafter referred to as VLC) circuit 107 and inverse quantizing circuit 108. Meanwhile, quantization step size used for this quantization is determined so as to take a value such that transmitting buffer memory 109 which will be described later does not break by providing feedback of buffer residual of transmitting buffer 109. This quantization step size is also delivered to VLC circuit 107 and inverse quantizing circuit 108.

VLC circuit 107 implements variable length coding to quantized data along with quantization step size, predictive mode and motion vector to deliver them to transmitting buffer memory 109 as transmit data.

The transmitting buffer memory 109 temporarily stores transmit data thereafter to read out it at a predetermined bit rate to thereby smooth transmit data to output it as bit stream, and to feed quantization control signal in macro block units back to quantizing circuit 106 in accordance with residual data quantity remaining in the memory to control quantization step size. Thus, transmitting buffer memory 109 adjusts data quantity generated as bit strem to maintain data of appropriate residual (remaining capacity) (data quantity such that no overflow or underflow takes place) within the memory. For example, when data residual of transmitting buffer memory 109 increase to allowed upper limit, transmitting buffer memory 109 allows quantization step size of quantizing circuit 106 to be large by quantization control signal, thus to reduce data quantity of quantized data. On the other hand, when data residual of transmit buffer memory 109 decrease down to allowed lower limit, transmitting buffer memory 109 allows quantization step size of quantizing cirucit 106 to be small by quantization control signal to thereby increase data quantity.

In this way, bit stream outputted from buffer memory 109 is delivered to picture decoded unit 80 through transmission media 70 comprised of a transmission path or a picture recording medium such as optical disc, magnetic disc, or magnetic tape etc. at a predetermined bit rate as described above.

On the other hand, inverse quantizing circuit 108 inverse-quantizes quantized data delivered from quantizing circuit 106 to reproduce coefficient data (quantization distortion is added) corresponding to output of the about-described DCT circuit 105 to deliver the coefficient data to Inverse Discrete Cosine Transform (hereinafter referred to as IDCT) circuit 110.

The IDCT circuit 110 implements IDCT processing to the coefficient data to reproduce picture data corresponding to input picture data in the intra-frame coding mode, and to reproduce difference data corresponding to output of predictive coding circuit 104 in the forward/backward/bidirectionally predictive modes, thus to deliver it to adding circuit 111.

When predictive coding mode is the forward/backward/bidirectionally predictive modes, the adding circuit 111 is supplied with motion-compensated predictive picture data from motion compensating circuit 113 which will be described later to described later to add the motion-compensated predictive picture data and difference data to thereby reproduce picture data corresponding to input picture data.

The picture data reproduced in this way is stored into frame memory 112. Namely, inverse quantizing circuit 108 ∼ adding circuit 111 constitute a local decoding circuit to locally decode quantized data outputted from quantizing circuit 106 to write decoded picture thus obtained into frame memory 112 as forward predictive picture or backward predictive picture. The frame memory 112 is comprised of a plurality of frame memories. Bank switching of the frame memory is carried out. In correspondence with picture to be encoded, single frame is outputted as forward predictive picture data, or is outputted as backward predictive picture data. Moreover, in the case of bidirectional prediction, forward predictive picture data and backward predictive picture data are, e.g., averaged. The averaged data thus obtained is outputted. These predictive picture data are entirely the same pictures as pictures reproduced by decoder 81 which will be described later. Picture to be processed next is caused to undergo forward/backward/bidirectional predictive coding on the basis of this predictive picture.

Namely, picture data which has been read out from frame memory 112 is delivered to motion compensating circuit 113. This motion compensating circuit 113 implements motion compensation to predictive picture data on the basis of motion vector to deliver the motion-compensated predictive picture data to predictive encoding circuit 104 and adding circuit 111.

Decoder 81 will now be described.

To decoder 81, bit stream is inputted through transmission media 70 is inputted. This bit stream is inputted to Variable Length Decoding (Inverse Variable Length Coding) (hereinafter referred to as IVLC) through receiving buffer 201. The IVLC circuit 202 reproduces quantized data, motion vector, predictive mode and quantization step size, etc. from bit stream. These quantized data and quantization step size are delivered to inverse quantizing circuit 203. Motion vector is delivered to motion compensating circuit 207, and predictive mode is delivered to adding circuit 205.

The operation of inverse quantizing circuit 203 ∼ adding circuit 205 is the same as that of local decoding circuit of encoder 61, the operations of frame memory group 206, motion compensating circuit 207 are respectively the same as those of frame memory 112 and motion compensating circuit 113 of encoder 61. On the basis of quantized data, motion vector, predictive mode, quantization step size, decoding is carried out. As a result, reproduction picture data is outputted from adding circuit 205.

As described above, in the conventional apparatus, coding bit rate of bit stream generated at encoder 65 is caused to be fixed in correspondence with transfer rate of transmission media 70. Under this limitation, quantity of data generated, i.e., quantization step size of quantizing circuit 106 in encoder 65 was controlled. In other words, for example, a control was conducted such that when pictures of complicated pattern are successive, quantization step size is caused to be larger to suppress quantity of data generated, while when simple patterns are successive, quantization step size is caused to be smaller to increase quantity of data generated so that buffer memory 109 does not produce overflow or underflow, thus to maintain a fixed rate.

Accordingly, in the conventional apparatus, when complicated pictures are successive, quantization step size is caused to be larger, so picture quality is deteriorated, while when simple pictures are successive, quantization step size is caused to be smaller. As a result, uniform picture quality cannot be obtained through the entirety.

In addition, in the case of recording bit stream onto a picture recording medium of a limited data capacity, in order to avoid extreme deterioration of picture quality with respect to pictures of complicated pattern, a fixed rate of high rate such that picture quality of such complicated picture is not injured must be applied to the entirety, resulting in decreased recording time.

European Patent Application Publication No. EP-A-0 475 251 discloses a method of encoding source video data in which the source video data is DCT transformed, quantized and variable length encoded to generate first encoded data and the coding amount (number of bits) in a block of the encoded data is detected. An optimum quantizing level is selected based on the number of bits. The DCT transferred signal is quantized again - using the optimum quantizing level - and variable length coded again. The optimum quantizing level is decided such that, as the number of bits becomes larger, the quantizing step width is made coarser.

EP-A-0 509 576 discloses a method of encoding source video data in which quantizing factors are selected to limit the quantizing noise introduced when performing multi-generations of data quantizing and de-quantizing on the basis that the complexity of the image represented by the data will change in selected generations. Specifically, an optimum quantizing factor which will compress the data sufficiently to fit into an allotted space is chosen, as is also an over-quantizing factor which is larger than the quantizing factor and is selected as a function of the expected cumulative change in image data complexity performed in subsequent generations.

According to a first aspect of the invention there is provided a method of encoding source video data, the method comprising the steps of:
encoding said source video data to generate first encoded data;
detecting a difficulty of encoding said source video data every predetermined time unit based on an amount of said first encoded data;
deciding a quantization step size every predetermined time unit on the basis of said amount of said first encoded data and the total quantity of data that may be used, said quantization step size being varied depending on said difficulty so that said quantization step size becomes smaller when said source video data is more complex and said quantization step size becomes larger when said source video data is more simple; and
encoding said source video data every predetermined time unit using said decided quantization step size.

According to a second aspect of the invention there is provided apparatus for encoding source video data, the apparatus comprising:
first encoding means for encoding said source video data to generate first encoded data;
encoding control means for detecting a difficulty of encoding said source video data every predetermined time unit based on an amount of said first encoded data;
quantization step size control means for deciding a quantization step size every predetermined time unit on the basis of said amount of said first encoded data and the total quantity of data that may be used, said quantization step size being varied depending on said difficulty so that said quantization step size becomes smaller when said source video data is more complex and said quantization step size becomes larger when said source video data is more simple; and
second encoding means for encoding said source video data every predetermined time unit using said decided quantization step size.

The invention will now be further described, by way of illustrative and non-limiting example, with reference to the accompanying drawings, in which:
FIG. 1 is a block diagram showing a circuit configuration of the essential part of a picture encoding apparatus to which this invention is applied.
FIG. 2 is a flowchart for explaining the operation of first encoding circuit constituting the above-mentioned picture encoding apparatus.
FIG. 3 is a flowchart for explaining the operation of second encoding circuit constituting the above-mentioned picture encoding apparatus.
FIG. 4 is a view showing respective pictures for explaining the configuration of GOP in MPEG.
FIG. 5 is a view showing respective pictures for explaining encoding control signal every GOP.
FIG. 6 is a flowchart for explaining the operation of the second encoding circuit constituting the above-mentioned picture encoding apparatus.
FIG. 7 is a view showing picture for explaining the principle of predictive encoding.
FIG. 8 is a view showing picture for explaining the principle of motion compensated predictive encoding.
FIG. 9 is a block diagram showing the configuration of picture encoding apparatus (unit) and picture decoding apparatus (unit) which are related to this invention.
FIG. 10 is a view showing the configuration of frame, macro block and slice.
FIG. 11 is a block diagram showing a circuit configuration of conventional encoder.

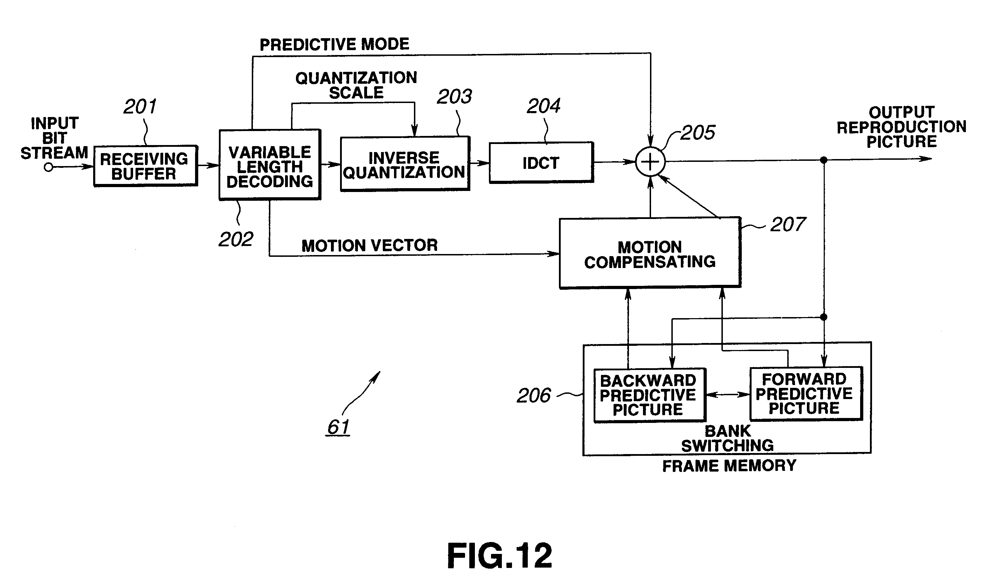

FIG. 12 is a block diagram showing a circuit configuration of conventional decoder.

An embodiment of a picture encoding method, a picture encoding apparatus and a picture recording medium according to this invention will now be described with reference to the attached drawings.

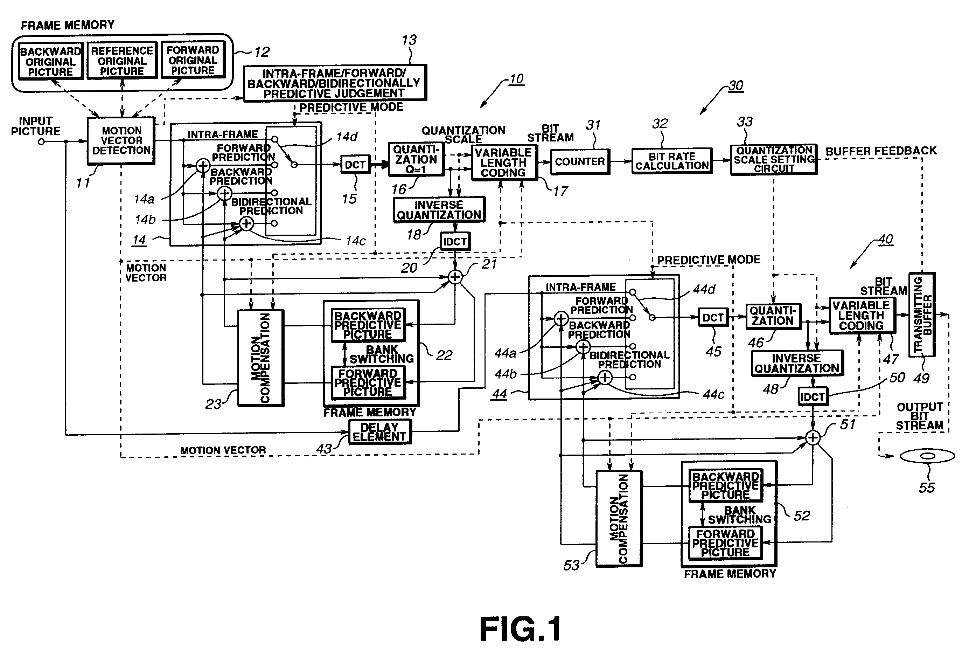

A picture encoding apparatus to which this invention is applied comprises, as shown in FIG. 1, for example, a first encoding circuit 10 for encoding an input video signal to generate first encoded data, an encoding control circuit 30 for determining encoding rate every predetermined time on the basis of data quantity every predetermined time of the first encoded data from the first encoding circuit 10 and total quantity of usable data, and a second encoding circuit 40 for encoding the input video signal every predetermined time on the basis of the encoding rate from the encoding control circuit 30 to generate second encoded data.

More particularly, the first encoding circuit 10 comprises, as shown in the FIG. 1 mentioned above, a frame memory group 12 for storing input picture data which is input video signal, a motion vector detecting circuit 11 for detecting motion vector of input picture data from input picture data on the basis of picture data stored in the frame memory group 12, a frame memory 22 for storing predictive picture data, a motion compensating circuit 23 for implementing motion compensation to predictive picture data which has been read out from the frame memory 22 on the basis of motion vector from the motion vector detecting circuit 11, a predictive encoding circuit 14 for predictive-encoding input picture data on the basis of motion-compensated predictive picture data from the motion compensating circuit 23, a DCT circuit 15 for implementing encoding, e.g., Discrete Cosine Transform (hereinafter referred to as DCT) processing to differences, etc. which are predictive errors from the predictive encoding circuit 14 to generate coefficient data, a quantizing circuit 16 for quantizing coefficient data from the DCT circuit 15 at a fixed quantization step size to generate quantized data, a Variable Length Code (hereinafter referred to as VLC) circuit 17 for allowing quantized data from the quantizing circuit 16 to undergo variable length encoding to output variable length encoded data, an inverse quantizing circuit 18 for inverse-quantizing quantized data from the quantizing circuit 16 to reproduce coefficient data, an Inverse Discrete Cosine Transform (hereinafter referred to as IDCT) circuit 20 for implementing decoding, e.g., IDCT processing to coefficient data from the inverse quantizing circuit 18, and an adding circuit 21 for adding difference from the IDCT circuit 20 and motion-compensated predictive picture data from the motion compensating circuit 23 to generate predictive picture data with respect to the next input picture data to deliver the predictive picture data to the frame memory 22.

Moreover, the second encoding circuit 40 comprises, as shown in the FIG. 1 mentioned above, a delay element 43 for delaying input picture data, a frame memory 52 for storing predictive picture data, a motion compensating circuit 53 for implementing motion compensation to predictive picture data which has been read out from the frame memory 52 on the basis of motion vector from the motion vector detecting circuit 11, a predictive encoding circuit 44 for predictive-encoding input picture data delayed at the delay element 43 on the basis of the motion compensated predictive picture data from the motion compensating circuit 53, a DCT circuit 45 for implementing encoding, e.g., DCT processing to difference, etc. from the predictive encoding circuit 44 to generate coefficient data, a quantization scale setting circuit 33 for setting quantization step size on the basis of encoding rate from the encoding control circuit 30, a quantizing circuit 46 for quantizing coefficient data from the DCT circuit 45 at quantization step size from the quantization scale setting circuit 33, a VLC circuit for allowing quantized data from the quantizing circuit 46 to undergo variable length encoding to output variable length encoded data, a transmitting buffer memory 49 for temporarily storing variable length encoded data from the VLC circuit 47 to output it at a fixed bit rate, an inverse quantizing circuit 48 for inverse-quantizing quantized data from the quantizing circuit 46 to reproduce coefficient data, an IDCT circuit 50 for implementing decoding, e.g., IDCT processing to the coefficient data from the inverse quantizing circuit 48 to reproduce the difference, and an adding circuit 51 for adding difference from the IDCT circuit 50 and the motion-compensated predictive picture data from the motion compensating circuit 53 to generate predictive picture data with respect to the next input picture data to deliver the predictive picture data to the frame memory 52.

In this picture encoding apparatus, by the first encoding circuit 10, encoding processing, e.g., predictive encoding processing, DCT processing, quantization processing at fixed quantization step size and variable length encoding processing are implemented to input picture data. By encoding control circuit 30, encoding bit rate is determined on the basis of data quantity every predetermined time of variable length encoded data which is the first bit stream obtained and data capacity of picture recording medium 55, e.g., comprised of optical disc, magnetic disc or magnetic tape, etc. or total quantity of usable data determined by bit rate of transmission path (transfer rate). Thereafter, by second encoding circuit 40, predictive encoding processing, DCT processing, quantization processing and variable length encoding processing are implemented to input picture data for a second time. In generating variable length encoded data which is second bit stream, quantization is made by quantization step size based on encoding bit rate.

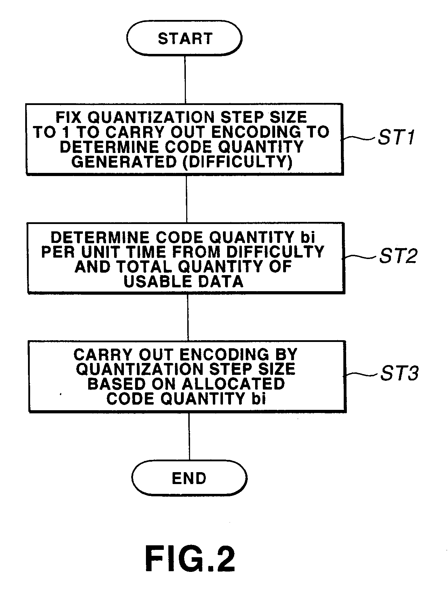

Namely, in this picture encoding apparatus, as shown in FIG. 2, for example, at step ST1, quantizing circuit 16 of first encoding circuit 10 sets quantization step size to, e.g., 1 to quantize coefficient data delivered from DCT circuit 15 to generate quantized data. Counter 31 of encoding control circuit 30 counts data quantity of variable length encoded data (first bit stream) obtained by allowing the quantized data to undergo variable length encoding every predetermined time, e.g., one frame to determine, every frame, quantity of code generated indicating difficulty of encoding.

At step ST2, bit rate calculating circuit 32 determines allocated code quantity allocated every frame on the basis of difficulty (quantity of code generated) every frame and total quantity of usable data.

At step ST3, quantizing circuit 46 of second encoding circuit 40 quantizes coefficient data delivered from DCT circuit 45 by quantization step size based on allocated code quantity to generate quantized data.

In actual terms, inputted picture data is temporarily stored into frame memory group 12. From the frame memory group 12, that picture data is read out in accordance with block format as described in the prior art.

Motion vector detecting circuit 11 reads out necessary picture data from frame memory group 12 in macro block units described above to detect motion vector. Namely, motion vector detecting circuit 11 detects, in macro block units, motion vector of current reference picture by using forward original picture and/or backward original picture stored in frame memory group 12. Here, detection of motion vector is carried out such that a motion vector in which, e.g., absolute value sum of differences between frames in macro block units becomes minimum is caused to be corresponding motion vector. The detected motion vector is delivered to motion compensating circuits 23, 53, etc., and absolute value sum of differences between frames in macro block units is delivered to intra-frame/forward/backward/bidirectionally predictive judging circuit 13.

The intra-frame/forward/backward/bidirectionally predictive judging circuit 13 determines predictive mode on the basis of the above value to control predictive encoding circuit 14 so as to carry out switching of intra-frame/forward/backward/bidirectional prediction in block units.

The predictive encoding circuit 14 comprises, as shown in FIG. 1 mentioned above, adding circuits 14a, 14b, 14c and selecting (changeover) switch 14d. When predictive encoding mode is intra-frame encoding mode, the selecting switch 14d select input picture data itself, and when predictive encoding mode is forward/backward/bidirectionally predictive mode, it selects differences (hereinafter referred to as difference data) every pixels of input picture data with respect to respective predictive pictures. Then, the selecting switch 14d delivers selected data to DCT circuit 15.

The DCT circuit 15 implements, in block units, DCT processing to input picture data or difference data delivered from selecting switch 14d by making use of the two-dimensional correlation of video signal to deliver coefficient data thus obtained to quantizing circuit 16.

The quantizing circuit 16 quantizes coefficient data delivered from DCT circuit 15 at a fixed quantization step size, e.g., with quantization step size being set to 1 to deliver quantized data thus obtained to VLC circuit 17 and inverse quantizing circuit 18.

The VLC circuit 17 carries out variable length encoding of quantized data along with quantization step size, predictive mode, and motion vector, etc. to deliver variable length encoded data obtained to encoding control circuit 30 as a first bit stream.

The encoding control circuit 30 comprises, as shown in the FIG. 1 mentioned above, counter 31 for counting data quantity every predetermined time of variable length encoded data from the VLC circuit 17, and bit rate calculating circuit 32 for calculating (determining) allocated code quantity per unit time on the basis of data quantity from the counter 31 and total quantity of usable data. The counter 31 counts data quantity of the first bit stream every predetermined time, e.g., every one frame to determine (calculates) difficulty every frame to deliver this difficulty to bit rate calculating circuit 32.

The bit rate calculating circuit 32 calculates (determines) allocated code quantity allocated every frame, i.e., mean encoding rate every frame time on the basis of difficulty every frame and total quantity of usable data, and delivers this allocated code quantity to quantization scale setting circuit 33 of second encoding circuit 40.

In actual terms, bit rate calculating circuit 32 performs the following calculation. Namely, assuming now that the number of all frames is N, total quantity of usable data is B, difficulty of the i (i = 0, 1, 2, ^{...} N-1)-th frame is dᵢ, and allocated code quantity with respect to the i-th frame is bᵢ, when this allocated code quantity bᵢ is caused to be proportional to difficulty dᵢ as indicated by the following formula (1), data total quantity B can be calculated by adding allocated code quantities bi of all frames as indicated by the following formula (2). In the formula, a represents constant.${\text{b}}_{\text{i}} \text{=} {\text{a×d}}_{\text{i}}$

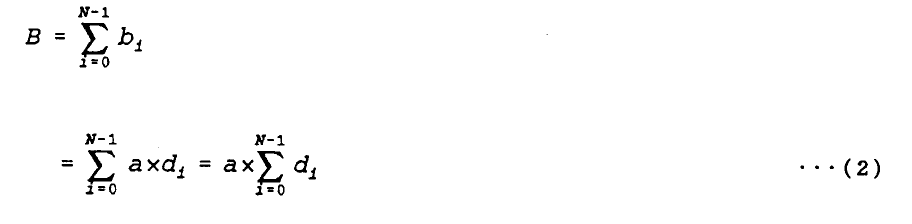

Accordingly, constant a can be calculated by the following formula (3). When substitution of this constant a into the formula (1) is made, allocated code quantity bᵢ with respect to the i-th frame can be calculated by the following formula (4).

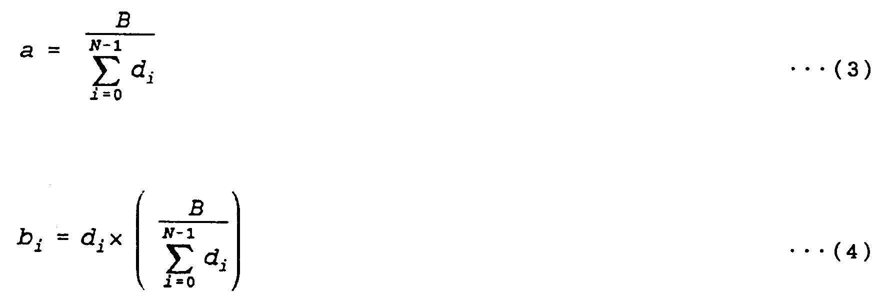

Thus, bit rate calculating circuit 32 increases allocated code quantity bᵢ with respect to frame of picture of complicated pattern, for example, and decreases allocated code quantity bᵢ with respect to frame of simple pattern.

On the other hand, inverse quantizing circuit 18 inverse-quantizes quantized data delivered from quantizing circuit 16 at quantization step size caused to be set to 1 to reproduce coefficient data (quantization distortion is added) corresponding to output of DCT circuit 15 to deliver that coefficient data to IDCT circuit 20.

The IDCT circuit 20 implements IDCT processing to coefficient data to reproduce input picture data corresponding to output of predictive encoding circuit 14 in the intra-frame encoding mode, and reproduces difference data in the forward/backward/bidirectionally predictive mode, thus to deliver reproduced data to adding circuit 21.

The adding circuit 21 is supplied, when predictive encoding mode is forward/backward/bidirectionally predictive mode, with motion-compensated predictive picture data from motion compensating circuit 23. The adding circuit 21 adds this predictive picture data and difference data delivered from IDCT circuit 20 to thereby reproduce picture data corresponding to input picture data.

The picture data reproduced in this way is stored into frame memory 22 as predictive picture data. Namely, inverse quantizing circuit 18 ∼ adding circuit 21 constitute a local decoding circuit to locally decode quantized data outputted from quantizing circuit 16 on the basis of predictive mode to write decoded picture obtained into frame memory 22 as forward predictive picture or backward predictive picture. Frame memory 22 is composed of a plurality of frame memories. Bank switching of frame memory is carried out. In dependency upon picture to be encoded, e.g., single frame is outputted as forward predictive picture data, or is outputted as backward predictive picture data. Further, in the case of forward/backward/bidirectional prediction, forward predictive picture data and backward predictive picture data are, e.g., averaged and the averaged data is outputted. These predictive picture data are entirely the same picture data as picture data reproduced by picture decoding apparatus which will be described later. Picture to be processed next is caused to undergo forward/backward/bidirectionally encoding on the basis of this predictive picture.

The operation of second encoding circuit 40 will now be described. It is to be noted that since circuits except for quantization scale setting circuit 33, delay element 43, quantizing circuit 46, and transmitting buffer 49 constituting second encoding circuit 40 perform the same operations as those of circuits constituting the above-described first encoding circuit 10, their explanation is omitted.

Delay element 43 delays input picture data, e.g., by time until encoding control signal is outputted from encoding control circuit 30. Then, at predictive encoding circuit 44 and DCT circuit 45, predictive encoding processing and DCT processing which are in accordance with predictive mode delivered from intra-frame/forward/backward/bidirectionally predictive judging circuit 13 are implemented to the delayed input picture data. Thus, coefficient data is generated.

Quantization scale setting circuit 33 determines (calculates) allocated code quantity every macro block (e.g., value obtained by dividing allocated code quantity every frame by the number of macro blocks in one frame) from delivered allocated code quantity every frame to carry out comparison between code quantity generated in a macro block which is detected from buffer feedback from transmitting buffer 49 and allocated code quantity every macro block. The quantization scale setting circuit 33 operates as follows so as to allow encoding bit rates of respective frames to become close to set mean encoding bit rate every frame time. Namely, in the case where code quantity generated in corresponding macro block is greater than allocated code quantity every macro block, the circuit 33 sets quantization step size of next macro block to a greater value in order to suppress code quantity generated by the next macro block. In contrast, in the case where code quantity generated in corresponding macro block is smaller than allocated code quantity every macro block, the circuit 33 sets quantization step size of next macro block to a smaller value so as to increase code quantity generated. It should be noted that quantization scale setting circuit 33 is operative so that in the case where buffer feedback from transmitting buffer 49 indicates that transmitting buffer 49 is in a state close to overflow state, it allows quantization step size to be larger to suppress overflow irrespective of comparison result between the allocated code quantity and code quantity generated, while in the case where buffer feedback from the transmitting buffer 49 indicates that transmitting buffer 49 is in a state close to underflow state, it allows quantization step to be smaller to suppress underflow irrespective of comparison result between the allocated code quantity and code quantity generated. While it has been described that comparison between code quantity generated and allocated code quantity is made every macro block to switch quantization step size every macro block, such switch may be carried out every slice. While it has been described that code quantity generated is detected from storage quantity of transmitting buffer 49, it may be directly obtained from output of variable length encoding circuit 47. The quantization scale setting circuit 33 delivers quantization step size set in this way to quantizing circuit 46.

The quantizing circuit 46 quantizes coefficient data delivered from DCT circuit 45 by quantization step size delivered from the above-described quantization scale setting circuit 33 to generate quantized data.

VLC circuit 47 allows quantized data delivered from quantizing circuit 46 to undergo variable length encoding along with quantization step size from quantization scale setting circuit 33, predictive mode from intra-frame/forward/backward/bidirectionally predictive judging circuit 13, and motion vector from motion vector detecting circuit 11, etc. to deliver variable length encoded data obtained to transmitting buffer memory 49 as a second bit stream.

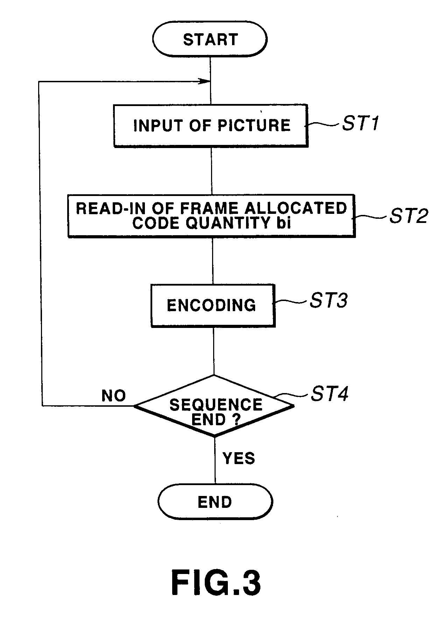

Namely, in this picture encoding apparatus, as shown in FIG. 3, for example, when picture data is inputted through delay element 43 at step ST1, quantization scale setting circuit 33 reads in, from encoding control circuit 30, allocated code quantity with respect to frame to be currently encoded at step ST2, then, the processing operation proceeds to step ST3.

At step ST3, predictive encoding circuit 44 ∼ VLC circuit 47 implement predictive encoding processing and DCT processing to picture data, and quantizes coefficient data by quantization step size based on allocated code quantity thereafter to allow it to undergo variable length encoding. Then, the processing operation proceeds to step ST4.

At the step ST4, whether or not encoding processing has been completed with respect to all frames (sequence) to which, e.g., the same picture size or the same transfer rate is applied is judged. If so, the processing is completed. In contrast, if not so, the processing operation returns to step ST1. Thus, variable rate encoding such that encoding rate changes in frame units is realized. Accordingly, even if pictures (frames) of complicated pattern are successive, there is no possibility that quantization step size is caused to be large with respect to these pictures as in the conventional apparatus. Thus, uniform high picture quality can be obtained through the entirety.

The transmitting buffer memory 49 temporarily stores variable length encoded data thereafter to read out it at a fixed bit rate to thereby smooth the variable length encoded data to output it as bit stream. The bit stream which has been outputted from transmitting buffer 49 is multiplexed along with, e.g., encoded audio signal, synchronizing signal, etc. Further, code for error correction is added thereto, and a predetermined modulation suitable for transmission or recording is applied thereto. Thereafter, bit stream thus processed is transmitted to picture decoding apparatus through, e.g., transmission path, or is recorded onto picture recording medium 55 comprised of optical disc, magnetic disc or magnetic tape, etc. as shown in the FIG. 1 mentioned above. Namely, since, in the second encoding circuit 40, there is carried out a variable rate encoding such that, e.g., allocated code quantity bᵢ is increased in advance with respect to complicated picture and allocated code quantity bᵢ is decreased with respect to simple picture, there is no necessity of applying a fixed rate of high rate through the entirety in order to avoid extreme deterioration of picture quality with respect to pictures of complicated pattern as in the case of conventional apparatus. Thus, recording time of picture recording medium 55 can be prolonged.

On the other hand, inverse quantizing circuit 48 inverse-quantizes quantized data delivered from quantizing circuit 46 by quantization step size used in the above-described quantizing circuit 46 to reproduce coefficient data (quantization distortion is added) corresponding to output of DCT circuit 45 to deliver this coefficient data to IDCT circuit 50. Namely, inverse quantizing circuit 48 ∼ adding circuit 51 constituting a local decoding circuit locally decode quantized data outputted from quantizing circuit 46 to write decoded picture obtained into frame memory 52 as forward predictive picture or backward predictive picture. Picture data stored in frame memory 52 is used as predictive picture for picture to be processed next.

Meanwhile, while, in the above-described emboidment, allocated code quantity per predetermined time, i.e., mean encoding rate per predetermined time is obtained every frame with frame being used as predetermined time, this invention is not limited to such an implementation. For example, GOP (Group of Pictures in so called MPEG (Moving Picture Expert Group) may be used as a predetermined time. It should be noted that the above-described MPEG is general name of the moving picture encoding system being studied in WG (Working Group) 11 of SC (Sub Committee) 29 in JTC (Joint Technical Committee) of so called ISO (International Standardization Organization) and IEC (International Electrotechnical Committee).

Namely, GOP in MPEG consists of at least one so called I picture, and a plurality of P pictures or B pictures (non-I picture). In a more practical sense, assuming that GOP consists of a single I picture, four P pictures having a period of 3 pictures, and ten B pictures, encoding control circuit 30 determines allocated code quantity every GOP. Here, I picture is picture to be subjected to intra-field or intra-frame encoding. P picture is picture which can be predicted only from forward direction, and is subjected to interfield or intra-frame encoding. B picture is picture which can be predicted from forward direction, from back ward direction and from both directions and is subjected to interfield or intra-frame encoding.

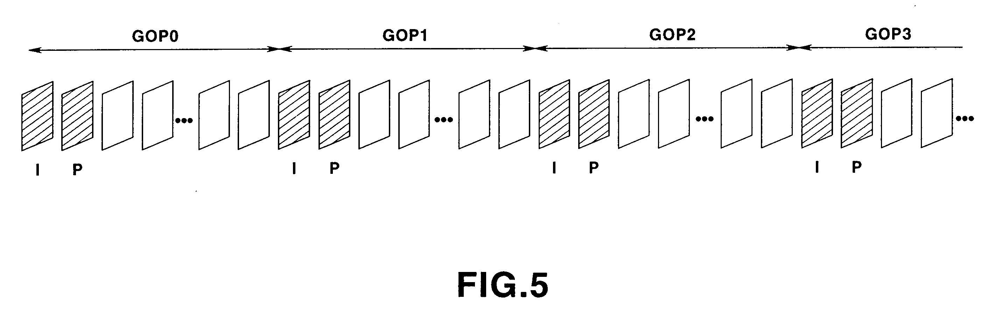

When it is assumed, as shown in FIG. 5, for example, that successive arbitrary two pictures within GOP having the number of pictures constituting GOP as period are I picture and P picture, and quantization step size is, e.g., 1, the first encoding circuit 10 implements predictive encoding processing, DCT processing, and variable length encoding processing to picture data of these I and P pictures to generate variable length encoded data to deliver the variable length encoded data to encoding control circuit 30. The reason why two pictures are used as I picture, P picture is to examine complexity of pattern and correlation between frames. From code quantity generated of I picture, it is possible to recognize complexity of pattern. From code quantity generated of P picture, it is possible to recognize correlation between frames. Since successive plural frames have similar pictorial images in general, it is possible to recognize tendency of pattern of GOP even from extracted two pictures.

Encoding control circuit 30 counts (calculates), every GOP, data quantity of I picture bit Iⱼ and data quantity of P picture bit Pj, and determines, every GOP, difficulty (code quantity generated GOP dⱼ (j = 0, 1, 2 ···) on the basis of these data quantities bit Iⱼ, bit Pⱼ and the number N of P pictures constituting GOP as indicated by the following formula (5), for example.${\text{GOPd}}_{\text{i}} \text{=} {\text{bitI}}_{\text{j}} \text{+} \text{N} \text{×} {\text{bitP}}_{\text{j}}$

The encoding control circuit 30 determines allocated code quantity allocated every GOP on the basis of difficulty (code quantity generated) GOP dj every GOP and total quantity of usable data, and delivers this allocated code quantity to second encoding circuit 40.

In actual terms, when the number of GOPs is assumed to be M, total quantity of usable data is assumed to be B, allocated code quantity with respect to the j-th GOP is GOP bⱼ, and this allocated code quantity GOP bj is caused to be in proportion to difficulty as indicated by the following formula (6), data total quantity B is determined by adding allocated code quantities GOP bⱼ of all GOPs as indicated by the following formula (7). In the formula (6), a is constant.

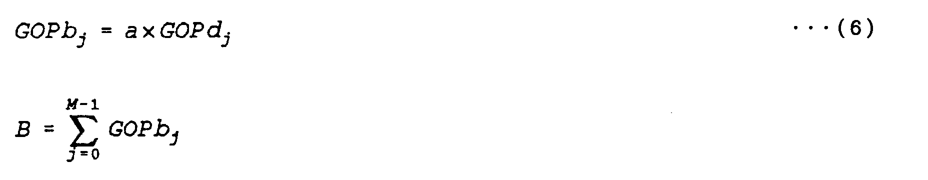

Accordingly, constant a can be determined by the following formula (8). Substituting this constant a into the formula (6), 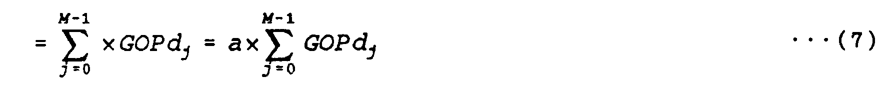 allocated code quantity GOPbj with respect to the j-th GOP can be determined by the following formula (9).

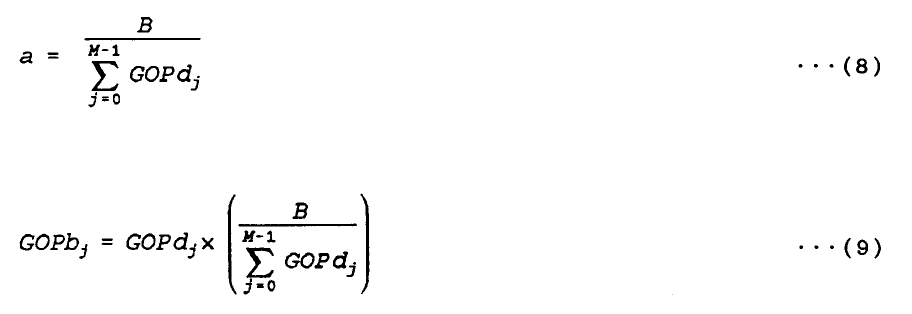

Thus, encoding control circuit 30 increases allocated code quantity GOP bⱼ with respect to, e.g., GOP in which pictures of complicated pattern are included or having low correlation between frames, and decreases allocated code quantity GOP bⱼ with respect to GOP in which pictures of simple pattern are included or having high correlation between frames.

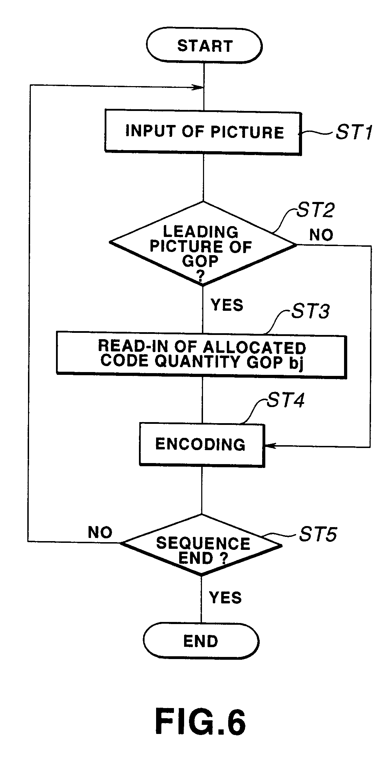

When second encoding circuit 40 is supplied with picture data through delay element 43 at step ST1, as shown in FIG. 6, for example, it judges whether or not picture data being inputted is the leading picture of GOP. If so, the processing operation proceeds to step ST3. If not so, the processing operation proceeds to step ST4.

At step ST3, second encoding circuit 40 reads in allocated code quantity with respect to GOP currently subjected to encoding from encoding control circuit 30. Then, the processing operation proceeds to step ST4.

At the step ST4, second encoding circuit 40 implements predictive encoding processing and DCT processing, and quantizes coefficient data by quantization step size based on allocated code quantity thereafter to allow it to undergo variable length encoding. Then, the processing operation proceeds to step ST5.

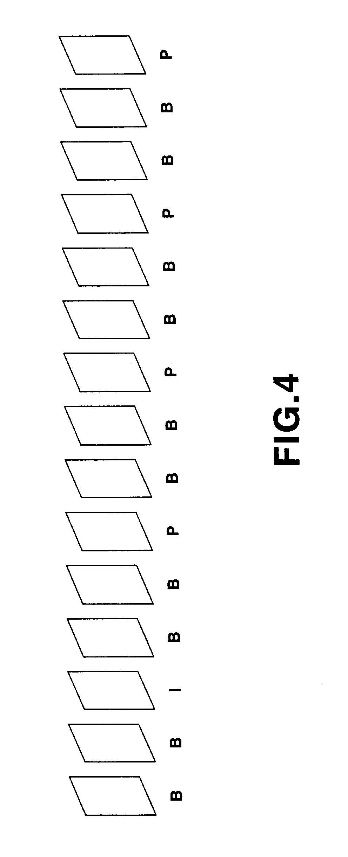

Here, quantization scale setting circuit 33 sets allocated code quantity every frame from delivered allocated code quantity every GOP by taking into consideration picture type (I picture, P picture, B picture) in actual encoding, e.g., picture type shown in FIG. 4. In a more practical sense, allocated code quantity with respect to I picture is increased, allocated code quantity with respect to B picture is decreased, and allocated code quantity with respect to P picture is caused to be intermediate therebetween.

At the subsequent step ST5, whether or not encoding processing has been completed with respect to all frames (sequence) to which the same picture size or the same transfer rate is applied is judged. If so, the processing is completed. In contrast, if not so, the processing operation returns to step ST1. Thus, a variable rate encoding such that encoding rate changes every GOP is realized. Even if pictures (frames) of complicated pattern are successive, there is no possibility that quantization step size is caused to be large with respect to these pictures as in the conventional apparatus. As a result, it is possible to obtain uniform high picture quality over the entirety. Further, since allocated code quantity every GOP is determined on the basis of two pictures in this embodiment, higher speed processing can be carried out as compared to the above-described emboidment. It is to be noted that it is a matter of course to determine allocated code quantities of respective GOPs on the basis of data quantities of all pictures within GOP.

It should be noted that this invention is not limited to the above-described embodiments. While, e.g., transform coding employs DCT in the above-described embodiments, so called Strato transform, Haar transform or Wavelet transform, etc. may be employed.

As is clear from the foregoing description, this invention employs a scheme to allow an input video signal to undergo encoding, e.g., predictive encoding, DCT processing, quantization at fixed quantization step size and variable length encoding to generate first encoded data to determine (calculate) allocated code quantity every frame or every GOP on the basis of data quantity every predetermined time, e.g., every frame or every GOP of the first encoded data and total quantity of usable data to encode the input video signal every predetermined time on the basis of the allocated code quantity to generate second encoded data. Thus, variable rate encoding such that encoding rate changes every predetermined time is realized. As a result, even if pictures (frames) of complicated are successive, there is no possibility that quantization step size is caused to be large with respect to these pictures as in the conventional apparatus. Thus, uniform high picture quality can be obtained over the entirety.

Further, since second encoded data obtained in a manner as described above has variable rate, in the case where such encoded data is recorded onto picture recording media, limited memory capacity can be effectively used, and recording time of picture recording media can be prolonged. In addition, picture data of high picture quality uniform through the entirety can be reproduced from the picture recording media.

## Claims

1. A method of encoding source video data, the method comprising the steps of:
encoding (10) said source video data to generate first encoded data;
detecting (31,32) a difficulty of encoding said source video data every predetermined time unit based on an amount of said first encoded data;
deciding (33) a quantization step size every predetermined time unit on the basis of said amount of said first encoded data and the total quantity of data that may be used, said quantization step size being varied depending on said difficulty so that said quantization step size becomes smaller when said source video data is more complex and said quantization step size becomes larger when said source video data is more simple; and
encoding (40) said source video data every predetermined time unit using said decided quantization step size.

2. A method according to claim 1, wherein at least a portion of said source video data is quantized (16) by a fixed quantization step size to generate the first encoded data.

3. A method according to claim 1 or claim 2, wherein the difficulty detection step comprises detecting (31) an amount of said first encoded data every predetermined time unit, and determining (32) an encoding rate every predetermined time unit on the basis of the total quantity of data and said amount of said first encoded data detected every predetermined time unit.

4. A method according to claim 3, wherein the determining (32) of the encoding rate comprises proportionally allocating the total quantity of data in dependence upon said amount of said first encoded data detected every predetermined time unit.

5. A method according to claim 3 or claim 4, wherein the encoding rate is determined every one frame on the basis of the total quantity of data and the amount of said first encoded data detected every one frame.

6. A method according to claim 3 or claim 4, wherein the encoding rate is determined every group of pictures (GOP) consisting of a plurality of frames on the basis of the total quantity of data and the amount of said first encoded data detected in at least a portion of every group of pictures (GOP).

7. A method according to claim 6, wherein the encoding rate for every group of pictures (GOP) is determined on the basis of the amount of said first encoded data detected in an intra-frame encoded picture and a forward predictive encoded picture in the group of pictures (GOP).

8. A method according to any one of claims 1 to 7, wherein:
a motion vector of a macro block of said source video data is detected (11);
the first-mentioned encoding step (10) comprises encoding said macro block of said source video data using said detected motion vector to generate said first encoded data; and
the second-mentioned encoding step (40) comprises encoding said macro block of said source video data using said optimum quantization step and said detected motion vector.

9. A method according to any one of claims 1 to 7, wherein:
a predictive mode of a macro block of said source video data is selected;
the first-mentioned encoding step (10) comprises encoding said macro block of said source video data using said selected predictive mode to generate said first encoded data; and
the second-mentioned encoding step (40) comprises encoding said macro block of said source video data using said optimum quantization step and said selected predictive mode.

10. Apparatus for encoding source video data, the apparatus comprising:
first encoding means (10) for encoding said source video data to generate first encoded data;
encoding control means (31,32) for detecting a difficulty of encoding said source video data every predetermined time unit based on an amount of said first encoded data;
quantization step size control means (33) for deciding a quantization step size every predetermined time unit on the basis of said amount of said first encoded data and the total quantity of data that may be used, said quantization step size being varied depending on said difficulty so that said quantization step size becomes smaller when said source video data is more complex and said quantization step size becomes larger when said source video data is more simple; and
second encoding means (40) for encoding said source video data every predetermined time unit using said decided quantization step size.

11. Apparatus according to claim 10, wherein the first encoding means (10) comprises quantizing means (16) for quantizing at least a portion of said source video data by a fixed quantization step size.

12. Apparatus according to claim 10 or claim 11, wherein the encoding control means (31,32) comprises detection means (31) for detecting an amount of said first encoded data every predetermined time unit, and determining means (32) for determining an encoding rate every predetermined time unit on the basis of the total quantity of data and said amount of said first encoded data detected every predetermined time unit.

13. Apparatus according to claim 12, wherein the determining means (32) is operative proportionally to allocate the total quantity of data in dependence upon said amount of said first encoded data detected every predetermined time unit.

14. Apparatus according to claim 12 or claim 13, wherein the encoding control means (31,32) is operative to determine the encoding rate every one frame on the basis of the total quantity of data and the amount of said first encoded data detected every one frame.

15. Apparatus according to claim 12 or claim 13, wherein the encoding control means (31,32) is operative to determine the encoding rate every group of pictures (GOP) consisting of a plurality of frames on the basis of the total quantity of data and the amount of said first encoded data detected in at least a portion of every group of pictures (GOP).

16. Apparatus according to claim 15, wherein the encoding control means (31,32) is operative to determine an encoding rate for every group of pictures (GOP) on the basis of the amount of said first encoded data detected in an intraframe encoded picture and a forward predictive encoded picture in the group of pictures (GOP).

17. Apparatus according to any one of claims 10 to 16, wherein:
means (11) is provided for detecting a motion vector of a macro block of said source video data;
said first encoding means (10) is operative to encode said macro block of said source video data using said detected motion vector to generate said first encoded data; and
said second encoding means (40) is operative to encode said macro block of said source video data using said optimum quantization step and said detected motion vector.

18. Apparatus according to any one of claims 10 to 16, wherein:
means is provided for selecting a predictive mode of a macro block of said source video data;
said first encoding means (10) is operative to encode said macro block of said source video data using said selected predictive mode to generate said first encoded data; and
said second encoding means (40) is operative to encode said macro block of said source video data using said optimum quantization step and said selected predictive mode.

## Patentansprüche

1. Verfahren zum Kodieren von Quell-Videodaten, welches Verfahren Schritte umfasst zum
Kodieren (10) der Quell-Videodaten, um erste kodierte Daten zu erzeugen,
Erfassen (31, 32) einer Schwierigkeit beim Kodieren der Quell-Videodaten in jeder vorbestimmten Zeiteinheit auf der Grundlage einer Menge der ersten kodierten Daten,
Entscheiden (33) über eine Quantisierungsschrittgröße in jeder vorbestimmten Zeiteinheit auf der Grundlage der Menge der ersten kodierten Daten und der Gesamtmenge von Daten, die benutzt werden können, wobei die Quantisierungsschrittgröße abhängig von der Schwierigkeit derart geändert wird, dass die Quantisierungsschrittgröße kleiner wird, wenn die Quell-Videodaten komplexer sind, und die Quantisierungsschrittgröße größer wird, wenn die Quell-Videodaten einfacher sind, und
Kodieren (40) der Quell-Videodaten in jeder vorbestimmten Zeiteinheit unter Benutzung der Quantisierungsschrittgröße, für die entschieden ist.

2. Verfahren nach Anspruch 1, bei dem zumindest ein Teil der Quell-Videodaten mit einer festen Quantisierungsschrittgröße quantisiert (16) wird, um die ersten kodierten Daten zu erzeugen.

3. Verfahren nach Anspruch 1 oder 2, bei dem der Schwierigkeitserfassungsschritt umfasst: das Erfassen (31) einer Menge der ersten kodierten Daten in jeder vorbestimmten Zeiteinheit und das Bestimmen (32) einer Kodierungsrate in jeder vorbestimmten Zeiteinheit auf der Grundlage der Gesamtmenge der Daten und der Menge der ersten kodierten Daten, die in jeder vorbestimmten Zeiteinheit erfasst wird.

4. Verfahren nach Anspruch 3, bei dem das Bestimmen (32) der Kodierungsrate ein proportionales Zuordnen der Gesamtmenge der Daten in Abhängigkeit von der Menge der ersten kodierten Daten umfasst, die in jeder vorbestimmten Zeiteinheit erfasst wird.

5. Verfahren nach Anspruch 3 oder 4, bei dem die Kodierungsrate für jeweils ein Vollbild auf der Grundlage der Gesamtmenge der Daten und der Menge der ersten kodierten Daten, die für jeweils ein Vollbild erfasst ist, bestimmt wird.

6. Verfahren nach Anspruch 3 oder 4, bei dem die Kodierungsrate für jede Gruppe von Bildern (GOP), die aus einer Vielzahl von Vollbildern besteht, auf der Grundlage der Gesamtmenge der Daten und der Menge der ersten kodierten Daten, die in Zumindest einem Teil jeder Gruppe von Bildern (GOP) erfasst ist, bestimmt wird.

7. Verfahren nach Anspruch 6, bei dem die Kodierungsrate für jede Gruppe von Bildern (GOP) auf der Grundlage der Menge der ersten kodierten Daten, die in einem intravollbildkodierten Bild und einem vorwärtsprädiktivkodierten Bild in der Gruppe von Bildern (GOP) erfasst ist, bestimmt wird.

8. Verfahren nach einem der Ansprüche 1 bis 7, bei dem
ein Bewegungsvektor eines Makroblocks der Quell-Videodaten erfasst (11) wird,
der erstgenannte Kodierungsschritt (10) ein Kodieren des Makroblocks der Quell-Videodaten unter Benutzung des erfassten Bewegungsvektors umfasst, um die ersten kodierten Daten zu erzeugen, und
der zweitgenannte Kodierungsschritt (40) ein Kodieren des Makroblocks der Quell-Videodaten unter Benutzung des optimalen Quantisierungsschritts und des erfassten Bewegungsvektors umfasst.

9. Verfahren nach einem der Ansprüche 1 bis 7, bei dem
ein Prädiktionsmodus für einen Makroblock der QuellVideodaten ausgewählt wird,
der erstgenannte Kodierungsschritt (10) das Kodieren des Makroblocks der Quell-Videodaten unter Benutzung des ausgewählten Prädiktionsmodus umfasst, um die ersten kodierten Daten zu erzeugen, und
der zweitgenannte Kodierungsschritt (40) das Kodieren des Makroblocks der Quell-Videodaten unter Benutzung des optimalen Quantisierungsschritts und des ausgewählten Prädiktionsmodus umfasst.

10. Vorrichtung zum Kodieren von Quell-Videodaten, welche Vorrichtung umfasst:
ein erstes Kodiermittel (10) zum Kodieren der Quell-Videodaten, um erste kodierte Daten zu erzeugen,
ein Kodierungssteuermittel (31, 32) zum Erfassen einer Schwierigkeit beim Kodieren der Quell-Videodaten in jeder vorbestimmten Zeiteinheit auf der Grundlage einer Menge der ersten kodierten Daten,
ein Quantisierungsschrittgrößen-Steuermittel (33) zum Entscheiden über eine Quantisierungsschrittgröße in jeder vorbestimmten Zeiteinheit auf der Grundlage der Menge der ersten kodierten Daten und der Gesamtmenge der Daten, die benutzt werden können, wobei die Quantisierungsschrittgröße abhängig von der Schwierigkeit derart geändert wird, dass die Quantisierungsschrittgröße kleiner wird, wenn die Quell-Videodaten komplexer sind, und die Quantisierungsschrittgröße größer wird, wenn die Quell-Videodaten einfacher sind, und
ein zweites Kodiermittel (40) zum Kodieren der Quell-Videodaten in jeder vorbestimmten Zeiteinheit unter Benutzung der Quantisierungsschrittgröße, für die entschieden ist.

11. Vorrichtung nach Anspruch 10, in der das erste Kodiermittel (10) ein Quantisiermittel (16) zum Quantisieren zumindest eines Teils der Quell-Videodaten mit einer festen Quantisierungsschrittgröße umfasst.

12. Vorrichtung nach Anspruch 10 oder 11, in der das Kodierungssteuermittel (31, 32) umfasst: ein Erfassungsmittel (31) zum Erfassen einer Menge der ersten kodierten Daten in jeder vorbestimmten Zeiteinheit und ein Bestimmungsmittel (32) zum Bestimmen einer Kodierungsrate in jeder vorbestimmten Zeiteinheit auf der Grundlage der Gesamtmenge der Daten und der Menge der ersten kodierten Daten, die in jeder vorbestimmten Zeiteinheit erfasst wird.

13. Vorrichtung nach Anspruch 12, in der das Bestimmungsmittel (32) betreibbar ist, um die Gesamtmenge der Daten in Abhängigkeit von der Menge der ersten kodierten Daten, die in jeder vorbestimmten Zeiteinheit erfasst wird, proportional zuzuordnen.

14. Vorrichtung nach Anspruch 12 oder 13, in der das Kodierungssteuermittel (31, 32) betreibbar ist, um die Kodierungsrate für jeweils ein Vollbild auf der Grundlage der Gesamtmenge der Daten und der Menge der ersten kodierten Daten, die für jeweils ein Vollbild erfasst wird, zu bestimmen.

15. Vorrichtung nach Anspruch 12 oder 13, in der das Kodierungssteuermittel (31, 32) betreibbar ist, um die Kodierungsrate für jede Gruppe von Bildern (GOP), die aus einer Vielzahl von Vollbildern besteht, auf der Grundlage der Gesamtmenge der Daten und der Menge der ersten kodierten Daten, die in zumindest einem Teil jeder Gruppe von Bildern (GOP) erfasst wird, zu bestimmen.

16. Vorrichtung nach Anspruch 15, in der das Kodierungssteuermittel (31, 32) betreibbar ist, um eine Kodierungsrate für jede Gruppe von Bildern (GOP) auf der Grundlage der Menge der ersten kodierten Daten, die in einem intravollbildkodierten Bild und einem vorwärtsprädiktivkodierten Bild in der Gruppe von Bildern (GOP) erfasst wird, zu bestimmen.

17. Vorrichtung nach einem der Ansprüche 10 bis 16, *in der*
ein Mittel (11) zum Erfassen eines Bewegungsvektors eines Makroblocks der Quell-Videodaten vorgesehen ist,
das erste Kodiermittel (10) betreibbar ist, um den Makroblock der Quell-Videodaten unter Benutzung des erfassten Bewegungsvektors zu kodieren, um die ersten kodierten Daten zu erzeugen, und
das zweite Kodiermittel (40) betreibbar ist, um den Makroblock der Quell-Videodaten unter Benutzung des optimalen Quantisierungsschritts und des erfassten Bewegungsvektors zu kodieren.

18. Vorrichtung nach einem der Ansprüche 10 bis 16, *in der*
ein Mittel zum Auswählen eines Prädiktionsmodus für einen Makroblock der Quell-Videodaten vorgesehen ist,
das erste Kodiermittel (10) betreibbar ist, um den Makroblock der Quell-Videodaten unter Benutzung des ausgewählten Prädiktionsmodus zu kodieren, um die ersten kodierten Daten zu erzeugen, und
das zweite Kodiermittel (40) betreibbar ist, um den Makroblock der Quell-Videodaten unter Benutzung des optimalen Quantisierungsschritts und des ausgewählten Prädiktionsmodus zu kodieren.

## Revendications

1. Procédé de codage de données vidéo de source, le procédé comprenant les étapes de :
codage (10) desdites données vidéo de source pour générer des premières données codées ;
détection (31, 32) d'une difficulté de codage desdites données vidéo de source à chaque unité de temps prédéterminée sur la base d'une quantité desdites premières données codées ;
détermination (33) d'une dimension d'étape de quantification à chaque unité de temps prédéterminée sur la base de ladite quantité desdites premières données codées et de la quantité totale de données qui peut être utilisée, ladite dimension d'étape de quantification étant variée en fonction de ladite difficulté de sorte que ladite dimension d'étape de quantification devient plus petite lorsque lesdites données vidéo de source sont plus complexes et ladite dimension d'étape de quantification devient plus grande lorsque lesdites données vidéo de source sont plus simples ; et
codage (40) desdites données vidéo de source à chaque unité de temps prédéterminée en utilisant ladite dimension d'étape de quantification déterminée.

2. Procédé selon la revendication 1, dans lequel au moins une partie desdites données vidéo de source sont quantifiées (16) par une dimension d'étape de quantification fixe pour générer les premières données codées.

3. Procédé selon la revendication 1 ou la revendication 2, dans lequel l'étape de détection de difficulté comprend la détection (31) d'une quantité desdites premières données codées à chaque unité de temps prédéterminée, et détermination (32) d'un taux de codage à chaque unité de temps prédéterminée sur la base de la quantité totale de données et ladite quantité desdites premières données codées détectées à chaque unité de temps prédéterminée.

4. Procédé selon la revendication 3, dans lequel la détermination (32) du taux de codage comprend l'allocation proportionnellement de la quantité totale de données en fonction de ladite quantité desdites premières données codées détectées à chaque unité de temps prédéterminée.

5. Procédé selon la revendication 3 ou la revendication 4, dans lequel le taux de codage est déterminé à chaque trame sur la base de la quantité totale de données et la quantité de premières données codées détectées à chaque trame.

6. Procédé selon la revendication 3 ou la revendication 4, dans lequel le taux de codage est déterminé pour chaque groupe d'images (GOP) se composant d'une pluralité de trames sur la base de la quantité totale de données et la quantité desdites premières données codées détectées dans au moins une partie de chaque groupe d'images (GOP).

7. Procédé selon la revendication 6, dans lequel le taux de codage pour chaque groupe d'images (GOP) est déterminé sur la base de la quantité desdites premières données codées détectées dans une image codée intratrame et une image codée prédictive avant dans le groupe d'images (GOP).

8. Procédé selon l'une quelconque des revendications 1 à 7, dans lequel :
un vecteur de mouvement d'un macro-bloc desdites données vidéo de source est détecté (11) ;
l'étape de codage mentionnée en premier (10) comprend le codage dudit macro-bloc et lesdites données vidéo de source utilisant ledit vecteur de mouvement détecté pour générer lesdites premières données codées ; et
l'étape de codage mentionnée en second (40) comprend le codage dudit macro-bloc desdites données vidéo de source utilisant ladite étape de quantification optimum et ledit vecteur de mouvement détecté.

9. Procédé selon l'une quelconque des revendications 1 à 7, dans lequel :
un mode prédictif d'un macro-bloc desdites données vidéo de source est sélectionné ;
l'étape de codage mentionnée en premier (10) comprend le codage dudit macro-bloc desdites données vidéo de source utilisant ledit mode prédictif sélectionné pour générer lesdites données codées en premier ; et
ladite étape de codage mentionnée en second (40) comprend le codage dudit macro-bloc desdites données vidéo de source utilisant ladite étape de quantification optimum et ledit mode prédictif sélectionné.

10. Appareil pour coder des données vidéo de source, l'appareil comprenant :
un premier moyen de codage (10) pour coder lesdites données vidéo de source pour générer des premières données codées ;
un moyen de commande de codage (31, 32) pour détecter une difficulté de codage desdites données vidéo de source à chaque unité de temps prédéterminée sur la base d'une quantité desdites premières données codées ;
un moyen de commande de dimension d'étape de quantification (33) pour déterminer une dimension d'étape de quantification à chaque unité de temps prédéterminée sur la base de ladite quantité desdites premières données codées et de la quantité totale de données qui peut être utilisée, ladite dimension d'étape de quantification étant variée en fonction de ladite difficulté de sorte que ladite dimension d'étape de quantification devient plus petite lorsque lesdites données vidéo de source sont plus complexes et ladite dimension d'étape de quantification devient plus grande lorsque lesdites données vidéo de source sont plus simples ; et
un second moyen de codage (40) pour coder lesdites données vidéo de source à chaque unité de temps prédéterminée en utilisant ladite dimension d'étape de quantification déterminée.

11. Appareil selon la revendication 10, dans lequel ledit premier moyen de codage (10) comprend un moyen de quantification (16) pour quantifier au moins une partie desdites données vidéo de source d'une dimension d'étape de quantification fixe.

12. Appareil selon la revendication 10 ou la revendication 11, dans lequel ledit moyen de commande de codage (31, 32) comprend un moyen de détection (31) pour détecter une quantité desdites premières données codées à chaque unité de temps prédéterminée, et un moyen de détermination (32) pour déterminer un taux de codage à chaque unité de temps prédéterminée sur la base de la quantité totale de données et ladite quantité desdites premières données codées détectées à chaque unité de temps prédéterminée.

13. Appareil selon la revendication 12, dans lequel ledit moyen de détermination (32) est fonctionnel proportionnellement pour allouer la quantité totale de données en fonction de ladite quantité desdites premières données codées détectées à chaque unité de temps prédéterminée.

14. Appareil selon la revendication 12 ou la revendication 13, dans lequel le moyen de commande de codage (31, 32) est fonctionnel pour déterminer à chaque taux de codage une trame sur la base de la quantité totale de données et la quantité desdites premières données codées détectées à chaque trame.

15. Appareil selon la revendication 12 ou la revendication 13, dans lequel le moyen de commande de codage (31, 32) est fonctionnel pour déterminer le taux de codage à chaque groupe d'images (GOP) se composant d'une pluralité de trames sur la base de la quantité totale de données et la quantité desdites premières données codées détectées dans au moins une partie de chaque groupe d'images (GOP).

16. Appareil selon la revendication 15, dans lequel le moyen de commande de codage (31, 32) est fonctionnel pour déterminer un taux de codage pour chaque groupe d'images (GOP) sur la base de la quantité desdites premières données codées détectées dans une image codée intra-trame et une image codée prédictive avant dans le groupe d'images (GOP).

17. Appareil selon l'une quelconque des revendications 10 à 16, dans lequel :
le moyen (11) est fourni pour détecter un vecteur de mouvement d'un macro-bloc dans lesdites données vidéo de source ;
ledit premier moyen de codage (10) est fonctionnel pour coder ledit macro-bloc desdites données vidéo de source utilisant ledit vecteur de mouvement détecté pour générer lesdites premières données codées ; et
ledit second moyen de codage (40) est fonctionnel pour coder ledit macro-bloc desdites données vidéo de source utilisant ladite étape de quantification optimum et ledit vecteur de mouvement détecté.

18. Appareil selon l'une quelconque des revendications 10 à 16, dans lequel :
un moyen est fourni pour sélectionner un mode prédictif d'un macro-bloc desdites données vidéo de source ;
ledit premier moyen de codage (10) est fonctionnel pour coder ledit macro-bloc desdites données vidéo de source utilisant ledit mode prédictif sélectionné pour générer lesdites premières données codées ; et
ledit second moyen de codage (40) est fonctionnel pour coder ledit macro-bloc desdites données vidéo de source utilisant ladite étape de quantification optimum et ledit mode prédictif sélectionné.
